Europäisches Patentamt

European Patent Office

Office européen des brevets

(11) Publication number: **0 132 795 B1**

(12) **EUROPEAN PATENT SPECIFICATION**

(45) Date of publication of patent specification: 09.09.92  (51) Int. Cl.⁵: **G06F  15/68**

(21) Application number: **84108529.3**

(22) Date of filing: **19.07.84**

(54) Method and apparatus for image processing with field portions.

(30) Priority: **29.07.83 US 518743**

(43) Date of publication of application:
**13.02.85 Bulletin  85/07**

(45) Publication of the grant of the patent:
**09.09.92 Bulletin  92/37**

(84) Designated Contracting States:
**DE FR GB IT NL**

(56) References cited:
**GB-A- 2 046 051**

**OPTICAL ENGINEERING, vol. 21, no. 5,
September/October 1982, pages 841-846, So-
ciety of Photo-Optical Instrumentation En-
gineers, Bellingham, Washington, US; D.E.
TROXEL et al.: "Interactive enhancement of
tone scale"**

**IEEE TRANSACTIONS ON NUCLEAR SCI-
ENCE, vol. NS-29, no. 4, August 1982, pages
1322-1330, IEEE, New York, US; S.M. PIZER et
al.: "Concepts of the display of medical im-
ages"**

(73) Proprietor: **POLAROID CORPORATION
549 Technology Square
Cambridge Massachusetts 02139(US)**

(72) Inventor: **Wray, William Robert
11 Simonds Road
Winchester Massachusetts 01890(US)**

(74) Representative: **Koch, Günther, Dipl.-Ing.
Patentanwälte Wallach, Koch, Dr. Haibach,
Feldkamp et al
P.O. Box 121120
W-8000 München 12(DE)**

## Description

This invention relates to the processing of image information. In particular it provides a method and apparatus whereby a computer with limited capacity can nevertheless process a relatively large field of image information.

The invention con be used for processing image information of essentially any nature. In a typical instance the information represents a two dimensional array or field of values. Image processing within the scope of the invention includes, without limitation, such diverse practices as photography, television, printing and the graphic arts, and laser scanning. It further includes instances where there is no original scene, as encountered with images created with sonar techniques, with infrared techniques, with radar, with ultrasound and with computerized axial tomography (CAT) scanners as well as with other medical imaging instruments.

Image processing with a field of such information typically involves a vast number of concurrent operations, in order to process the information for all picture elements, i.e. pixels, of the field. The field-by-field processing of this information on a computer requires large and correspondently costly memory capacity to store the image information for all the pixels. For example, the computer storage of a square field having 512 pixels on a side, and in which one byte defines the field value for one pixel, requires a memory with a capacity of 262,144 bytes. The computer memory further must have at least twice this capacity to store such a field of input values and to store a like field of resultant values. More commonly, the memory requires three times this capacity, or over three-quarters of a million bytes, to store the pixel information for two input fields and for the resultant computed field.

Optical Engineering Vol. 21 No. 5 Sept./Oct. 1982, pages 841-846 discloses an analog and digital circuitry for image processing and gradation enhancement. The circuit enables the real-time computation of a tone scale transformation which is then applied to a digitized picture being displayed on a television monitor. The tone scale transformations are controlled by knobs that are labeled in terms meaningful to photographic artisans, rather than requiring an operator to specify points on a transfer characteristic, as is common with other systems. These knobs directly specify minimum and maximum densities, brightness, and shadow, highlight, and overall contrast. These control parameters may be selectively enabled by the operator. After the appropriate aesthetic modifications have been achieved on the television display, the operator may initiate the transformation of the complete stored image prior to subsequent computer processing or hard copy output.

IEEE TRANSACTION ON NUCLEAR SCIENCE Volume NS-29, No. 4, August 1982, pages 1322-1330 discloses concepts of the display of Medical Images.

Display is the step of the imaging chain in which the image is put into a form viewable by an observer. The objectives of display can be qualitative or quantitative, and each requires different display approaches. For each objective, producing a high-quality result requires facing issues in both the space and intensity dimensions. In the spatial dimension the major choices are of sampling and interpolation. In the intensity dimension the major choices are of sampling, display scales, assignment by the display device of display scale values to display-driving intensities, and contrast enhancement. Concepts and approaches, but not hardware, for each of these choices will be presented.

GB-A-2 046 051 discloses an iterative real time histogram modification system for use in image processing, such as image contrast enhancement of for example scenes, radiograms and thermograms.

In the described system input analog video signals to be modified are digitized and applied to an encoding module including a code RAM which compresses the input grey levels into a lesser number of output grey levels in accordance with a recoding strategy applied to the code RAM. The recoding strategy is determined iteratively using a predetermined scene adaptive operator. This is done by forming a histogram of the pixels in the respective output grey levels. Thereafter the count in each grey level is compared with a predetermined population figure for that grey level and if the difference between the count and population figure is outside an acceptable range, termed a window, then the recoding strategy to be used during the next frame of the input signals is altered so that the number of input grey levels compressed into the particular output grey level is adjusted appropriately.

The recoding strategy may be applied to a local area of the frame, which area is selected at will, or to the entire frame in which case the histogram is formed from a subset of all the pixels. The scene adaptive operators include histogram equalization, Gaussian distribution, hyperbolic and exponential.

By using a suitably programmed microprocessor different scene adaptive operators may be selected at will and a 'zoom' facility may be provided in which the size of the local area is varied and corresponding changes are made to the window and set of population figures.

In any of the above described systems several aspects of fine/coarse image processing is disclosed.

Some image processing, such as that which enhances an image, involves operations on both widely spaced sets of one or more pixels and on close sets of pixels. For example, U.S. Patent No. 4,384,336 issued May 17, 1983, the disclosure of which is incorporated herein by this reference, discloses a form of image processing termed lightness imaging and which employs both local computations and global computations. Global computations are in effect macrospan computations in that they include operations with image values representing widely spaced locations of the image field. Conversely, local computations are in effect microspan computations in that they include operations with values representing closely spaced locations of the image field.

It is an object of this invention to provide a method and apparatus for processing image information with a computer having limited memory capacity relative to the size of the image field being processed wherein relatively high speed operation is obtained and wherein one storage element is a photographic recording. The term 'photographic recording' (or record) is used herein in a broad sense to include a radiation-responsive record on a photochemical emulsion medium as well as on an electrostatic medium.

According to the invention the specified technical problem is solved by a method comprising the steps of claim 1. Further developments of the method are specified in claims 2-7.

An apparatus for solving said technical problem comprises the features of claim 8. A development thereof is claimed in claim 9.

One result of these features is that a single digital electronic memory or other read/write memory element of relatively small storage capacity can store a relatively coarse detail representation of the entire image field for use in computational operations that produce the intermediate set of values. The same memory element can store, in place of the relatively coarse image field information, a relatively fine detail, high resolution representation of a portion of the same image field for use in the computational operations on field portions. The photographic record serves as an information storage element, preferably of read-only character, for the input image field being processed. It is read more than once to provide image-field information required for the image processing and which otherwise would require extensive read/write memory for storage.

The invention accordingly comprises the several steps and the relation of one or more of such steps with respect to each of the others, and the apparatus embodying features of construction, combinations of elements, and arrangements of parts adapted to effect such steps, all as explained in the following detailed disclosure, and the scope of the invention is indicated in the claims.

For a fuller understanding of the nature and objects of the invention, reference should be made to the following detailed description and the accompanying drawings, in which:

FIGURE 1 is a block schematic representation of image processing apparatus for practice of the invention;

FIGURE 2 is a diagrammatic representation of image processing according to one practice of the invention;

FIGURES 3 and 4 diagram, respectively, macrospan and microspan features of the FIGURE 2 practice of the invention;

FIGURES 5, 6 and 7 illustrate portion-by-portion processing respectively at the top, within, and at the bottom of an image field;

FIGURE 8 is a representation like FIGURE 2 of a further embodiment of the invention; and

FIGURE 9 illustrates a flow chart of image processing according to the invention.

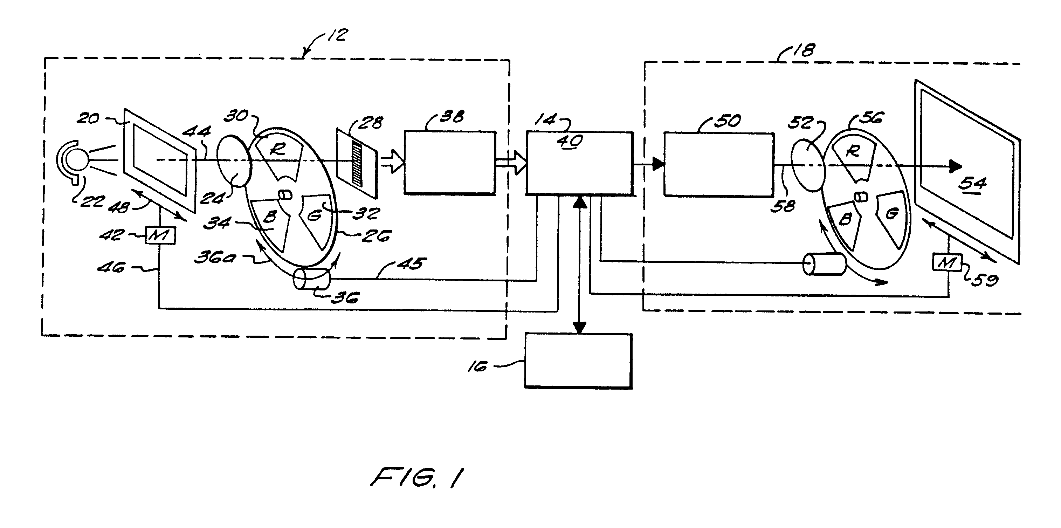

FIGURE 1 shows an image processing system according to the invention for processing a color photograph. The illustrated system implements lightness imaging as described in the noted U. S. Patent No. 4,384,336. The illustrated system has four portions, an input section 12, a processing section 14, an image memory section 16, and an output section 18.

The input section 12, viewed generally, provides a high resolution, i.e. fine detail, representation of an image. The high resolution information can be obtained by scanning an actual three-dimensional scene. Alternatively it can be obtained from storage, as from a magnetic recording or other recording in machine readable form. The illustrated input section 12 provides the high resolution information from a photographic transparency 20 and accordingly illustrates the latter practice with optical scanning of a photographic recording. A light source 22 directs light through the transparency 20 onto a lens 24 that projects the light through a rotating filter wheel 26 to a photolectric transducer 28. The filter wheel 26 has red, green and blue filters 30, 32 and 34, respectively, spaced apart about the periphery of an otherwise opaque disc. The filter wheel is rotated about its central axis by a motor 36 under external synchronization control as designated with the bi-directional arrow 36a. The illustrated transducer 28 is a charge-coupled device (CCD) having a single linear array of CCD transducing elements, illustratively with a (512 X 1) configuration. The resultant electrical signals from the CCD array are applied to an analog to digital converter 38 which applies corresponding digital transducer signals in parallel to an image processor 40 that forms the system processing section 14.

The illustrated input section 12 further includes a motor 42 that moves the photographic transparency 20 laterally in the image plane, in the direction of arrow 48, with a scanning motion across the optical path 44 along which the lamp 22, lens 24, filter wheel 26, and transducer 28 are aligned. The motor 42, like the filter-driving motor 36, is externally controlled. In the illustrated system, the image processor 40 is connected by lines 45 and 46 to each motor to provide the controlled movement of filter wheel 26 and, separately, of tee transparency 20. A selectively moveable carriage, not shown and of conventional construction, mounts the transparency and is coupled with motor 42 for attaining this Scanning movement.

With this construction, the illustrated input section 12 projects to the transducing array 28 the image or scene recorded on the transparency 20 and the illustrated linear array converts a line segment of the projected radiant energy to electrical signals. The line segment is selected by the transparency position provided with the scanning motor 42. The filter wheel 26 passes to the transducing array 28 different wavelength components of this line segment in controlled selected succession. The A/D converter 38 accordingly applies to the processing section 14 digital signals responsive to each line segment of the transparency and further responsive to the three constituent colors wavebands thereof. The scanning translation of the transparency 20 generates a continuous succession of such line segments that constitutes the entire scene in the photograph 20.

With further reference to FIGURE 1, the image memory section 16 typically is a random access, digital electronic, read/write memory (RAM) of semiconductor construction. It includes memory sections for storing sets of input values for any given processing operation of the image processor 40 and at least a further memory section for storing a corresponding set of interim or resultant values which the processor develops.

The illustrated image processor 40 is an image processing computer operating with a stored program. Image processors for this operation and as further described herein are available commercially and can be provided by those skilled in this art using, for example, the teaching in the noted U.S. Patent No. 4,384,336.

The system output section 18 in general converts the output data from the processing section 14 to a desired representation. In the illustrated system, the output section 18 includes a monochromatic cathode ray tube (CRT) display terminal 50, with independent controls for the X, Y and Z axes, which receives input signals from the image processor 40. The optical output image from the display terminal 50 is projected through a lens 52 onto an image recording medium illustrated as a photosensitive film 54. This film 54 can, for example, be part of a composite photographic sheet, such as a sheet of Polaroid brand film, on which the image can be printed directly. As described further below, the output image from the terminal 50 corresponds to a portion or strip of the input scene on the transparency 20, and the output section 18 selectively moves the output-recording film 54 to record each such strip at the proper position of the scene. For this purpose, the illustrated output film is carried on a carriage (not shown) which a motor 59 drives under processor control. The movement of the film 54 enables the output portion 18 to format different strips of processed image information into a composite representation of the full input scene.

Interposed in the optical path 58 between the display terminal 50 and the photosensitive sheet 54 is a color wheel 56. The color wheel 56 can be identical to the color wheel 26, with a succession of red, green and blue filters and rotatively driven and controlled by way of a motor under control of the image processor 40. Where desired, a single filter wheel such as the wheel 26 can be used for both the input section 12 and the output section 18 simply by arranging the system elements to direct both the optical input path 44 and the optical output path 58 along parallel directions and aligned with the common filter wheel, as those skilled in this art can provide.

The output section 18 of the illustrated image processing system thus receives processed image signals and converts them to a desired form, here for recording on a photosensitive medium. The resultant scene to which the photosensitive medium is exposed, and which it correspondently stores, represents the input image information which the input section 12 produces, with the representation being selected by the operation of the image processor 40. In a typical photographic practice, the processing provides lightness imaging as well as photographic enlargement and color enhancement.

With further reference to FIGURE 1, the system of the invention can process a field of image information with an image memory section 16 having a comparatively small capacity relative to the number of pixels in the image field. In particular, lightness imaging involves comparing a first set of values for each pixel in the image field with a second set of pixel related values to produce a third set of values. This processing of a square image field having 512 pixels on a side, by way of example, and correspondingly having (512 x 512) or 256K values in each set, typically requires an image memory 16 with a capacity for storing at least three such sets, or a minimum capacity of roughly 768K bytes. Note that "K" represents the arithmetic value 1024, so that 256K arithmetically equals 262,144; and 768K is arithmetically equivalent to 786,432.

The system of this invention, however, requires an image memory 16 with only a fraction of this capacity, for example, less than 64K bytes. The invention attains this economy with several features. One is that the system incorporates a photographic recording of input information as a memory element in addition to the image memory 16, and which is read at different times during an image processing operation. Another is that the system performs some processing calculations on a coarse detail representation of the full image field and performs other processing calculations on segmental portions or strips of a higher resolution, finer detail representation of the image field. Both the coarse representations of the image, and the segmental strips of the high resolution representation of the image, can be stored in read/write image memory 16 of relatively small capacity.

The former calculations may be termed macrospan calculations and the latter ones may be termed microspan calculations. Macrospan calculations are image processing calculations which involve operations on relatively distant or widely spaced pixels in the image field. An example is the global calculations involved in lightness imaging. These calculations can be performed with relatively coarse representations of an image field. Such representations can be defined with relatively few values and hence can be stored in an image memory of relatively small capacity. Microspan calculations are calculations which involve operations with only proximal or closely spaced pixels in the image field, as exemplified by the local calculations involved in lightness imaging. A segmental strip of the high resolution image field to which these calculations are applied can also be defined with relatively few values and hence can be stored in an image memory of relatively small capacity.

Further, by way of example, a coarse representation of the foregoing (512 x 512) square field, and having only 64 values per side, can be stored in a (64 X 64) byte memory, i. e. a total capacity of approximately 4K bytes. A 16-pixel wide strip of the same field at full resolution requires (512 X 16) bytes of memory for storage, or only 8K bytes capacity. Both latter storage requirements are far less than the 768K capacity required to store the entire field at full resolution.

High resolution image information for such image processing computations is generally provided essentially directly from the scene or other spatial image, and low resolution information can be provided either from the scene or by averaging down higher resolution information. More particularly, where the input scene or image is recorded in photographic form, a high resolution scan of the photographic recording provides the high resolution information. Low resolution information can be produced with a correspondingly low resolution scan of the input recording or by an averaging processing of high resolution information.

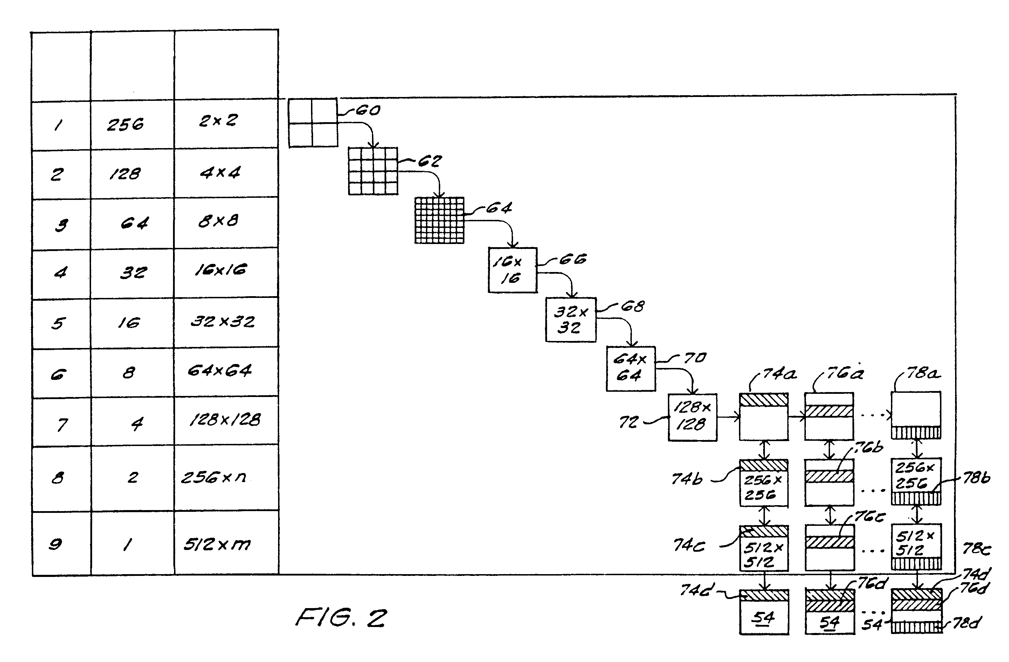

FIGURE 2 illustrates one operating sequence of the FIGURE 1 system 10 for executed lightness imaging with the zoom technique described in the U. S. Patent No. 4,384,336 under the heading "Multiple-size Pairings" and with specific reference to Figure 10 thereof. The illustrated sequence involves nine processing stages or steps as designated in the left column of FIGURE 2 with the numbers one through nine. Information pertaining to each processing stage appears in rows extending to the right from the stage number.

The illustrated first stage of processing involves macrospan operations on a coarse, low-resolution, two-pixel by two-pixel array 60 that represents the entire field of image information. The image memory 16 requires only a two-byte by two-byte capacity to store one field of this information. The image processor 40 in FIGURE 1 can provide this low resolution, two-by-two representation of a full image field by averaging a high resolution image field. e.g., by averaging information received from the transducer 28. The image processing operation performed in this stage compares adjacent ones of the coarse pixels. In terms of a high resolution fine detail image of 512 pixels by 512 pixels, the effective distance between the elements being compared is 256 pixels, as the second column of FIGURE 2 shows. In particular, the calculation in this illustrated first lightness imaging stage pairs a (2 X 2) field of initialized old product values with the coarse (2 X 2) field of values obtained from the input transparency 20. The processing produces a new (2 X 2) field of combined values, after resetting of averaged product values.

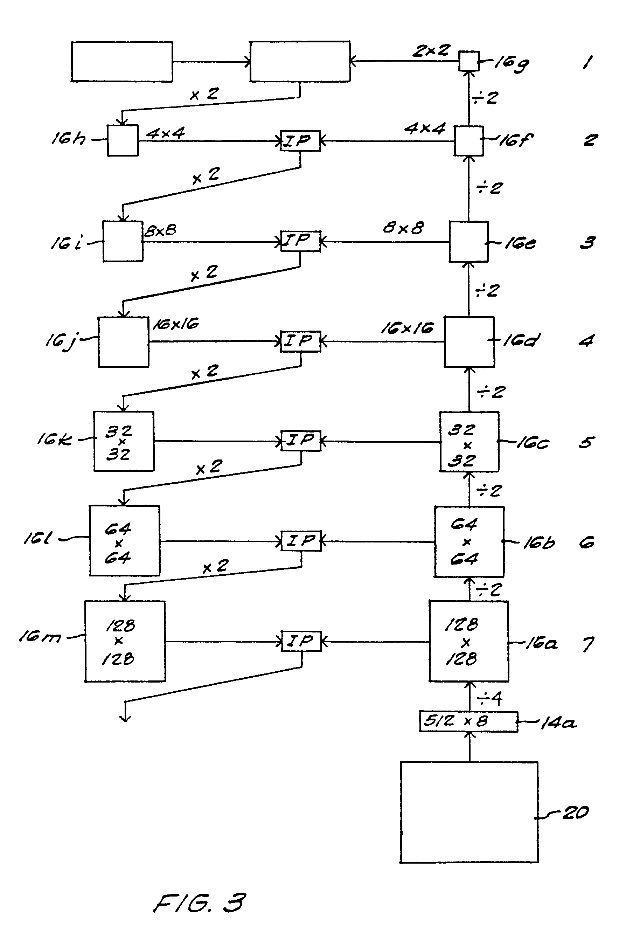

The next stage of the illustrated sequence operates with arrays 62 of four pixels by four pixels. The old product values for this stage are obtained by expanding by two the (2 X 2) array of averaged product values that resulted from the first stage. This set of values is combined with a (4 X 4) array representing the entire image field. The latter image information can be obtained as described below with reference to FIGURE 3, or from another scan of the input transparency 20 with appropriate scanning resolution and/or with post-scanning averaging. The image memory 16 accordingly stores, for the second stage, an input set of old product values requiring 4 bytes X 4 bytes, a second input set of values of like size and representing the (4 X 4) array of the image being processed, and a third like-sized set of values representing the resultant averaged products. The effective distance between locations being compared in this second stage is 128 high-resolution pixels, as designated in the second column of FIGURE 2.

With further reference to FIGURE 2, the illustrated operating sequence proceeds to stage three, in which each set of values being processed is an (8 X 8) array 64, again representing the full image field and in which the effective distance between locations being compared is 64 high resolution pixels. In the fourth illustrated stage, each array 66 has 16 values X 16 values, in the fifth stage each set of values being processed is a (32 X 32) array 68, and in the sixth stage each set of values is a (64 X 64) array 70. The illustrated seventh processing stage is similar, processing the full image field and comparing locations spaced apart by four high resolution pixels. Each set of values being processed is a (128 X 128) array 72 and the image memory 16 of the system 10 is required to store three such arrays, one being the old product value, one being the new coarse representation of the image field and the third being the resultant averaged product values. This requires a total image memory capacity of approximately 48K bytes.

At this juncture the sequence of FIGURE 2 terminates performing operations with a full image field. Instead, the image processing operations of stages eight and nine are performed with strips of the image field. In the illustrated sequence, each such strip is processed from the intermediate resolution at the end of stage seven through stages eight and nine to the desired final high resolution and then an adjacent strip is processed in like fashion.

As shown at the lower right in FIGURE 2, the output stage 18 of the FIGURE 1 system stores the resultant information for each strip on the output film 54 in a manner that assembles these fragmentary results into a final composite representation of the full image field.

In particular, with continued reference to FIGURE 2, a first strip 74a of the (128 X 128) array 72 of averaged product values resultant from step seven is, in stage eight, expanded in both directions by a factor of two to yield a (256 X 256) array. The expanded strip, illustrated as constituting an array of (256 X 8) values, is processed with a like strip of the input image field. Two rows of the resultant (256 X 8) array of averaged product values, however, are discarded for boundary considerations, as described further hereinafter. In processing stage nine, the remaining (256 X 6) array is expanded in both directions by a factor of two. The resultant (512 X 12) array of values is processed further with a like-sized array of high precision, fine detail values from the original image field. Two rows of the resultant array are discarded, again due to boundary factors, leaving a (512 X 10) array of final values.

These averaged product values which result from processing stage nine form a high resolution, fine detail strip 74d of the image field. This strip is a final resultant from the FIGURE 1 image processor 40. As indicated in FIGURE 2, it is applied to an output medium, in the form of the film sheet 54, for storage and formatting with subsequently processed strips.

The illustrated system then processes the next successive segmental strip 76a of the array 72 produced in stage seven. The resultant stage nine values constituting a resultant averaged product strip 76d are recorded on the photosensitive sheet 54 adjacent to the values from strip 74d, as appears at the lower right in FIGURE 2. Successive segmental strips of the array of values produced from processing stage seven are processed in this manner, and the resultant averaged product values formatted on the output medium which the photosensitive sheet 54 forms. This process continues until the last, bottom strip 78a is processed to form a resultant image strip 78d which is formatted to complete the final display or other output.

FIGURE 2 shows that the image memory 16 capacity required per array for stage eight is (256 X n) bytes, and is (512 X m) bytes for stage nine, where "n" and "m" are the number of rows of picture elements in the largest strip processed in the respective stage. In the example described, (n = 8) and (m = 14).

FIGURE 3 shows in further detail the information storage for one practice of the macrospan operations, e.g. stages one through seven, of the FIGURE 2 sequence with the system of FIGURE 1. The input source image to be processed, as stored in the photographic medium 20, is shown at the lower right. It is illustrated as having a resolution of (512 x 512) pixels. The system input stage 12 reads the source image, typically row-by-row, and stores in a processor register 14a or other read/write memory element the radiance information for one strip of this image. Where each illustrated strip represents (512 X 8) pixels, by way of example, the register 14a accordingly stores a like number of bytes. The processor compresses the strip representation by a factor of four, e.g., to (128 X 2) in the above example, and accumulates in an image memory section 16a these compressed, e.g. averaged, radiance values from successive strips of the input image. The memory section 16a thus, at the end of the image reading operation, stores a full array of compressed radiance values, e.g., of (128 X 128) values. These values are used for stage seven processing, as FIGURE 3 indicates along the right margin.

With further reference to FIGURE 3, the image processor 40 (FIGURE 1) compresses the array of values in memory section 16a by factors of two to produce --and store -- arrays of radiance information required for the remaining stages one through six. The illustrated processor hence produces and stores a (64 X 64) set of radiance information in memory section 16b, a (32 X 32) set in section 16c, a (16 X 16) set in section 16d, an (8 X 8) set in section 16e, a (4 X 4) set in section 16f, and a (2 X 2) set in section 16g. Note that the full (512 X 512) set of radiance information is stored only in the input transparency 20. Each strip of fine detail information in register 14a is, in this example, discarded after it is read out for compression and storage in memory section 16a. Note also that all the illustrated memory sections may, in practice, not be separate locations in the image memory 16. Rather, the same locations may, at different times, form different ones of the several illustrated sections.

FIGURE 3 further shows that the image processor 40 executes the first stage operation by image processing the radiance information in memory section 16g with a like-sized set of initialized values. The resultant array of combined values, which corresponds in size to the FIGURE 2 array 60, is expanded by two to produce a (4 X 4) set of processed values that is illustrated as stored in memory section 16h. Successive image process and expand operations produce increasingly finer detail and correspondingly larger-valued sets of processed values which are represented as stored in memory sections 16i, 16j, 16k, 16l and 16m. The last is the result of stage seven.

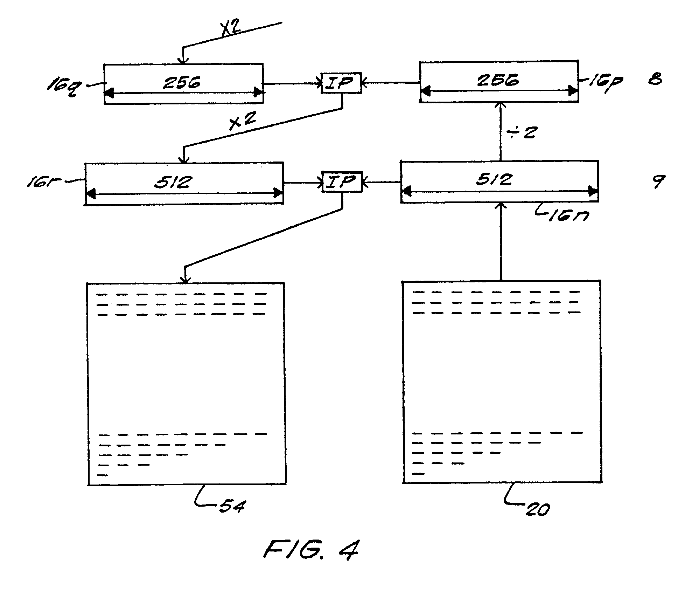

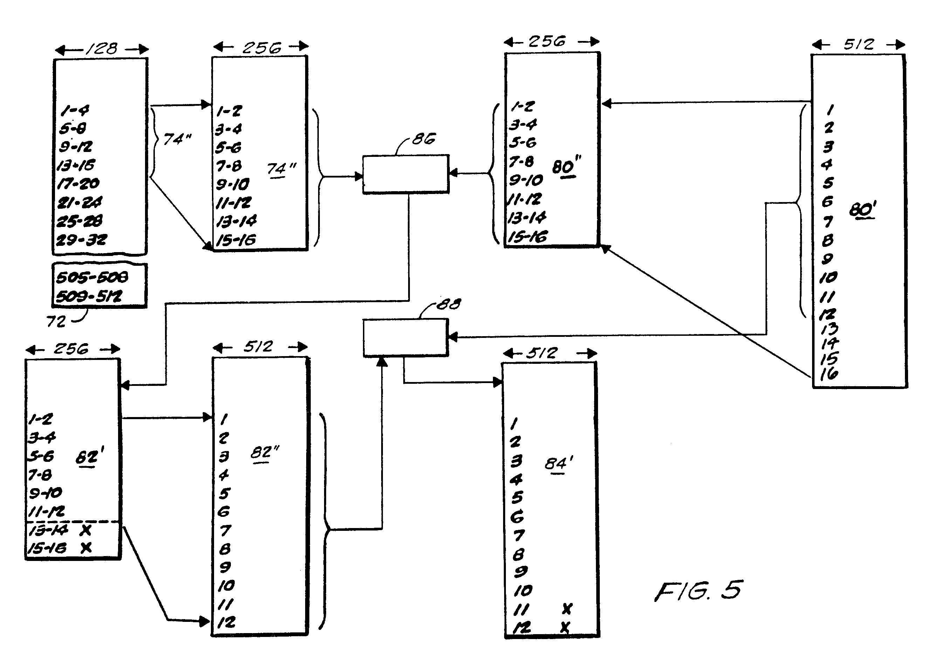

FIGURE 4 shows, like FIGURE 3, information storage in the FIGURE 1 system for one practice of microspan operations, e.g. stages eight and nine of the FIGURE 2 sequence. The input, source information for these operations is obtained by again reading the source image of the photographic medium 20. Only a portion of the full image information, as required for each iteration of stage nine as illustrated below with reference to FIGURES 5, 6 and 7, is stored in a memory section 16n. This source information is compressed by two and the resultant set stored in a section 16p, for stage eight processing.

FIGURE 4 shows that further memory sections 16q and 16r store sets of processed values for use in stages eight and nine. In stage eight a strip of values produced in stage seven is expanded by a factor of two and image processed with the source values in memory section 16p. The resultant values are expanded and stored in section 16r, and image processed with the source values in section 16n.

The values produced in this final image processing operation are applied to the system output stage 18 for formatting and storage on the output medium 54.

The embodiment of FiGURES 3 and 4 involves several scans of the input photographic record 20. One scan of the entire image field is used for the macrospan operating stages which FIGURE 3 shows. Several scans of overlapping portions of the image field are used for the microspan stages according to FIGURE 4. In particular, the illustrated processing of each strip through stages eight and nine involves a reading of a different portion of the photographic input information. The image information read during each scan is stored in read/write memory, but may be erased prior to the next scan, or read, of the record 20. Hence the same read/write memory elements can store image information obtained from the different readings of the photographic record.

FIGURE 5 shows in further detail operations in stages eight and nine of the strip sequential processing of FIGURE 2 for the top strip 74a of the (128 X 128) array 72 of stage seven. This array 72 of product values is shown at the left side of FIGURE 5. The first row of values in this array represents, as labelled, pixel rows one, two, three and four of the high resolution image field, i. e. of the square field having 512 pixels per side. The second row of values represents pixel rows five through eight, and the last row represents pixel rows 509 - 512, all as labelled.

The first operation in the illustrated processing stage eight is to expand the (128 X 4) set 74' of values that forms the top strip 74a by a factor of two to form a (256 X 8) set 74'' of expanded product values. The next operation, for lightness image processing, combines that set as representing old product values with a like-sized set of values which constitute a strip of the original image information being processed. The input section 12 of the system 10 of FIGURE 1 provides the latter set by scanning or otherwise reading the original input scene of the transparancy 20. FIGURE 5 illustrates, on the right side of the drawing, the resultant (512 X 16) set 80' of radiance-responsive values which represent pixel rows one through sixteen of the high resolution, fine detail input information obtained in this manner from the transparency 20.

After the image processor 40 in the processor section 14 averages this set of values down by a factor of two to a set 80'' having the same size as set 74'', it executes an image process step 86 that combines the resultant values of the sets 74'' and 80'' according to lightness imaging techniques to produce a further set 82' having (256 X 8) averaged product values. The illustrated image process step 86 performs two sequences of value comparisons, and each sequence involves four such comparisons. A first comparison is between each value in the set 74'' and the value at the same location one row up in set 80''. A second comparison is between each value in set 74'' and the value at the same location one column to the left in set 80''. The third comparison is between values one row down, and the fourth is between values one column to the right.

Comparisons of values at boundaries of a set with locations outside the full field, i.e. beyond an edge of the image field, are resolved with known techniques (see U.S. Patent No. 4,384,336). However, comparisons of values at a boundary of either set 74'', 80'' with locations within the field but outside either set produce erroneous results. Values that include such strip-boundary errors, therefore, are replaced. More particularly, with continued reference to FIGURE 5, the foregoing two sequences of lightness imaging processing in step 86 twice compares values from a bottom strip-boundary row of one set 74'' and 80'' with a row in the other such set located below it, i.e. with the row that represents pixel rows 17 and 18. However, the latter row is outside of both sets 74'' and 80''. The results of these two comparisons are not valid, and are discarded. This is illustrated in FIGURE 5 with the "X" in each of rows 13-14 and 15-16 of the resultant set 82' of values. Accordingly, only the top six rows of values in set 82' are used in subsequent processing. The discarded values are replaced in a subsequent operating stage with values that are free of strip-boundary error.

FIGURE 5 further shows that the set 82' of values produced in processing stage eight is, after discarding the values in the lower two rows, expanded by a factor of two to form a set 82'' of (512 X 12) values and which corresponds to the top twelve pixel rows. The lightness image processing of stage nine combines with step 88 the expanded product values in set 82'' with the high resolution radiance-related values of the first twelve rows of set 80', to produce a set 84' of combined or product values. The processing again involves, like step 86, comparisons of the values in the bottom two strip-bounding rows of sets 82'' and 80' with values in rows that are outside either set and hence are not present. The lower two rows of values in set 84' are therefore discarded, as designated with an "X" in each such row.

The remaining (512 X 10) set 84' of values represents finally processed image information. These values accordingly are applied by the FIGURE 1 image processor 40 to the output section 18, illustratively for recording on the photosensitive sheet 54.

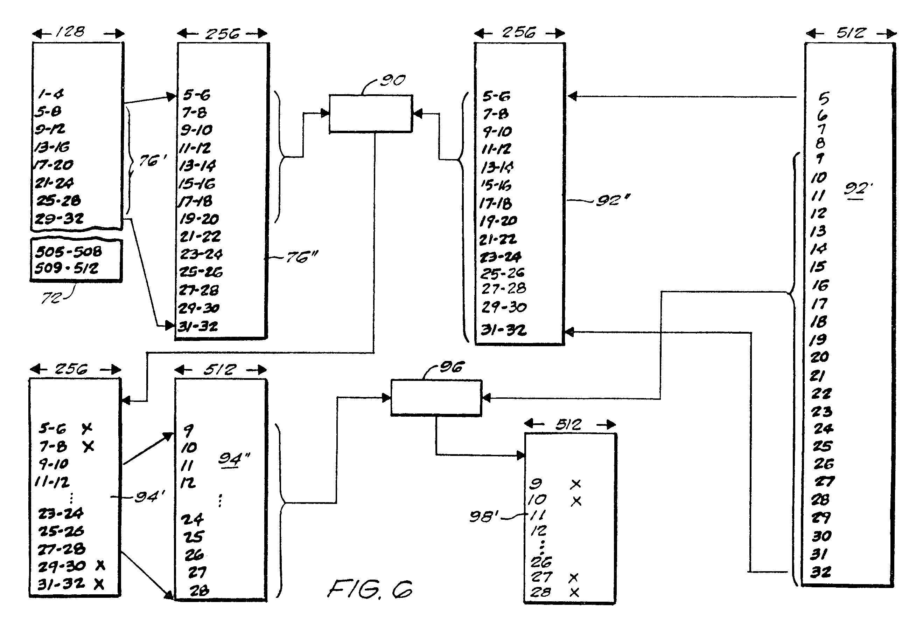

FIGURE 6 is a representation like FIGURE 5 for the expand, compress, image process, and boundary discard operations which the system 10 of FIGURE 1 executes in processing stages eight and nine of the FIGURE 2 operation for the second strip 76a of the array 72 produced with processing stage seven.

The first step in the illustrated operation of FIGURE 6, in processing stage eight, is to expand the set 76' of product values that constitutes strip 76a of array 72 by a factor of two. The illustrated set 76' has values for pixel rows 5 - 32 of the desired final high precision image field. These values are processed with the sequence which FIGURE 6 shows to produce a final set of values having sixteen rows, numbered 11 through 26, of the final image field. More particularly, the expanded set 76'' produced in stage eight is combined in image process step 90 with a like-sized set 92'' of compound radiance values produced by compressing, i.e. averaging down, by a factor of two a (512 X 28) array set 92' of radiance-related values produced from the original input information to the system 10. The result of this image process step 90 is a like-sized set 94' of product values. However, step 90 produces invalid, strip-boundary, values in the top two rows and in the bottom two rows of the value set 94'. These rows of values are accordingly discarded. That is, the top two rows of set 94', designated rows 5-6 and 7-8, and the lower two rows designated 29-30 and 31-32, are discarded and not used in further processing.

With further reference to FIGURE 6, in processing stage nine, the remaining valid values of set 94' are expanded by a factor of two to form a (512 X 20) set 94''. This set of values is image processed in step 96 with the same-numbered rows of values in set 92' to produce a final set 98' of values. The boundary rows of values combined with values outside the sets 94'' and 92' in step 96, i.e. the two upper rows designated 9 and 10 and the two lower rows designated 27 and 28 are discarded from the resultant set 98' of values. This leaves a final (512 X 16) set of values ready for outputting with the output stage 18 of the FIGURE 1 system 10. The output stage accordingly formats the processed image strip which these sixteen rows of values produce with the image strip produced from the first ten rows of values, previously produced as described with reference to FIGURE 5, to complete rows 1 - 26 of the output representation of the image field of interest.

It will now be apparent that the strip 76a overlaps strip 74a by the amount, i.e. number of rows, required to replace values discarded due to strip-boundary errors.

The illustrated FIGURE 1 system repeats the sequence of operative steps shown in FIGURE 6 for each successive strip of values in the array 72 (FIGURE 2). Each such repetition of the FIGURE 6 operation produces additional finally processed rows of values of the output image field. Each operation processes an initially oversized set of values which overlaps the previously processed set. The operations include the replacement of strip-boundary errors, as described, with values free of such errors.

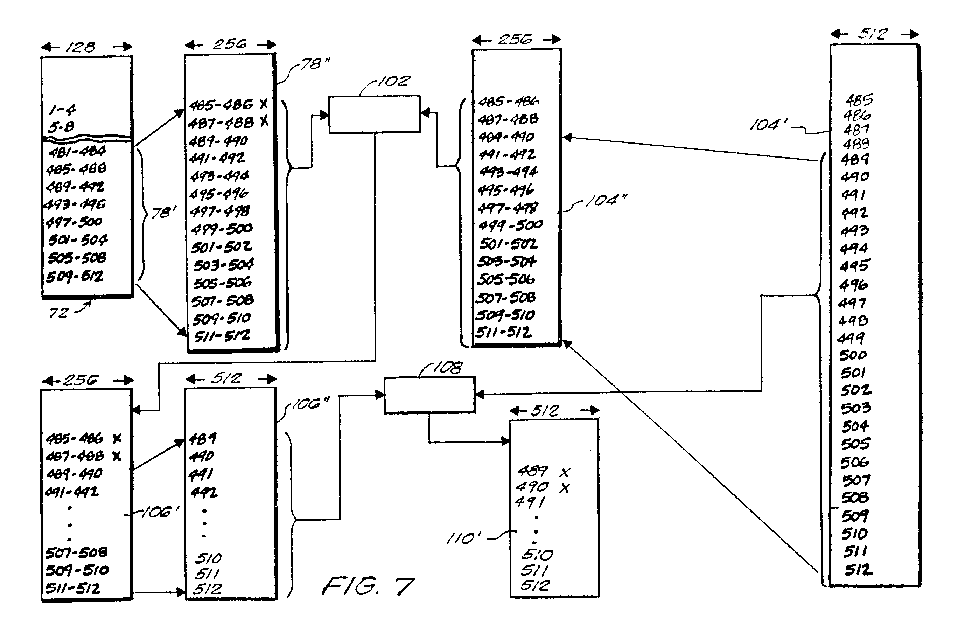

FIGURE 7 shows that the execution of processing stages eight and nine of FIGURE 2 for the last, bottommost strip 78a of the array 72 produced in stage seven proceeds essentially the same as the processing of the first strip as diagramed in FIGURE 3. In particular, the (128 X 8) set 78' of values for strip 78a is expanded by a factor of two to form a (256 X 14) valued set 78''. This set is image processed in step 102 with a like-sized set 104'' of radiance-related input values which the illustrated system derives from the system input portion. The resultant values constitute a set 106' that has invalid strip-boundary values in the upper two rows. Accordingly, these rows of values are discarded. In processing stage nine, the remaining rows of values in set 106' are expanded again by a factor of two to form a (512 X 24) valued set 106''. That array of values is image processed in step 108 with radiance-related values for the same rows from a set 104' to produce a resultant set 110'. The upper two rows of values in this set, representing pixel rows 489 and 490, have already been produced without strip-boundary error and printed. The remaining subset of (512 X 22) values is ready for outputting to the system output stage 18 and formatting with the resultant values developed previously. This completes one full operation of the image processing system according to the illustrative processing sequence diagrammed in FIGURE 2. A complete composite image field of resultant values is recorded on the photosensitive sheet 54, which can be photographically processed to produce the desired visible representation of the image being processed. Other storage and final processing of the resultant image field of values can of course be practiced.

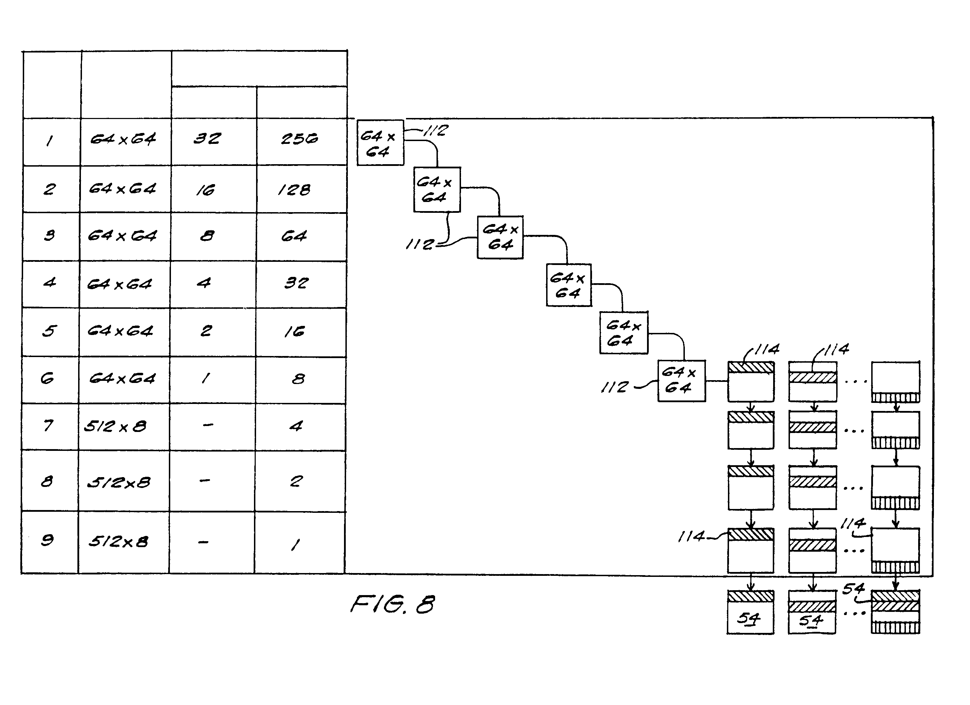

In contrast to image processing which employs macrospan operations with image fields of selected different resolutions, as shown in FIGURE 2, FIGURE 8 shows another embodiment of the FIGURE 1 system which executes macrospan imaging operations with image fields of uniform resolution. U. S. Patent No. 4,384,336 discloses one form of this image processing technique with reference to FIGURE 4 of that patent. This example of this practice of the invention, with an image field having an ultimate resolution with (512 X 512) values, employs macrospan operations with relatively low resolution, coarse fields 112 each of (64 X 64) values. FIGURE 8 sets forth information for this embodiment with nine process stages, the same as in FIGURE 2 for ready comparison. Stages one through six of the FIGURE 6 sequence perform macrospan operations, and in each the image memory is required to store sets of values each having (64 X 64) bytes, i.e. the image memory requires 4096 bytes capacity for each array of values. The table in FIGURE 8 sets forth that the first processing stage compares the information at pixels located a half field apart, or separated by 32 pixels in the coarse array. This corresponds to a comparison separation of 256 pixels in the full resolution field, as also set forth.

The comparison separation decreases by a factor of two in each successive process stage until in stage six the separation is one unit of the coarse (64 X 64) array.

The illustrated sequence then switches to microspan operations for each of stages seven, eight and nine, and processes only strips 114 of the full image field in each of the latter stages. In the illustrated embodiment of FIGURE 8, each such strip has (512 X 8 ) values and represents a like number of pixels in the full resolution image field. This requires the same size image memory, i. e. 4096 bytes per array, as stages one through six. The comparison separation for the microspan imaging operations of these last three stages is four, two and one respectively. The strip processing of stages seven, eight and nine includes discarding of erroneous values due to strip-boundary portion and includes the overlapping of successive strips, as described with reference to FIGURES 5, 6 and 7.

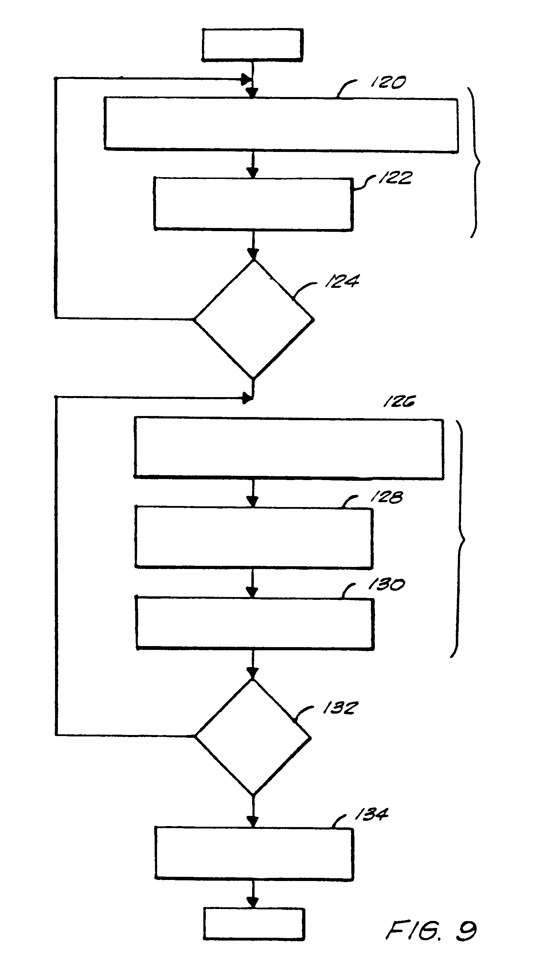

FIGURE 9 is a flow chart which summarizes image processing according to the invention, as illustrated with the embodiments of FIGURES 2 and 8. The illustrated operation commences with a first step 120 in which the scale of interactions of an input field of values with a processed field of values is set. This operating step can include expand and/or compress operations as illustrated in FIGURES 5-7, and a change in comparison separations as illustrated in FIGURE 8. A subsequent step 122 executes one cycle of image processing with the two fields of values. These two steps 120 and 122 form one stage of macrospan processing, as shown in FIGURES 2 and 8.

The operating sequence of the flow chart next executes a decision to determine whether to end the processing on a full field basis i. e. to end the macrospan process, with decision 124. A negative response returns the sequence to repeat the steps 120 and 122. An affirmative decision advances the operation to step 126, in which a selected strip of values in the input field and an identically located strip in the processed field are scaled, e.g., expanded and/or compressed as appropriate. The two identically scaled strips are then image processed in step 128, with discarding of erroneous strip-boundary values and overlapping of successive strips as described above with reference to FIGURES 5, 6, and 7. The next step, 130, formats the resultant strips of image information.

These steps, 126, 128 and 130 together form one stage of microspan processing, as further illustrated in the embodiments of FIGURES 2 and 8.

The illustrated flow chart of FIGURE 9 next determines, with decision 132, whether the last strip of the image field has been processed. A negative determination returns the operation to repeat steps 126, 128 and 130. An affirmative result, on the other hand, advances the operation to step 134, in which the formatted resultant is processed as desired.

The parameters described herein for sizes of image fields, arrays, strips and the like, as well as memory requirements, are illustrative. Further, the terms macrospan and microspan ore used with reference to comparative computations performed, in effect, on differently spaced locations in a field of image-related values. The distinction between the two operations can be selected for any given practice of the invention. Factors involved in the selection include the size and the resolution of the image field being processed, and the available image memory capacity.

## Claims

1. A method for processing a set of values representing an image field wherein the processing includes plural computational operations with values representing spatially different locations of said field, comprising the steps of
   A. providing a pictorial record of said image field, and
   B. reading said pictorial record a first time to produce a first set of lightness values and reading said pictorial record at least a second time to produce at least a second set of lightness values,
   C. storing in a read/write memory element said first set of lightness values of substantially all locations of said image field,
   D. averaging said first set of lightness value to produce an intermediate set of values relatively sparsely representing substantially all locations of said image field,
   E. storing said second set of lightness values of said same image field in locations of said memory element which at a different time stored values of said first set thereof,
   F. performing plural further averaging operations on said second set of values, to produce plural second resultant sets of values, each of which relatively finely represents only a segmental portion of said image field and different ones of which represent different segmental portions of said image field, and
   G. producing a final set of values, representing substantially all locations of said image field, in response to said intermediate set of lightness values, which represents substantially all locations of said image field, and to plural second resultant sets of lightness values representing different segmental portions of said field.

2. The method of claim 1, the further improvement comprising the step of performing each further computational operation on both a second set of lightness values representing only a portion of said image field and on a further set of lightness values produced from said intermediate set of lightness values.

3. The method of claim 1, the further improvement comprising the step of discarding from each second resultant set of lightness values those values which result from computational operations with lightness values of a second set and representing locations of said field outside the segmented portion, which that second set of lightness values represents.

4. The method of claim 3, the further improvement comprising the further step of formatting different second resultant sets of lightness values representing selectively overlapping different segmental field portions into a further set of lightness values that represents substantially all locations of said image field.

5. The method of claim 1, the further improvement comprising the step of formatting different second resultant sets of lightness values representing different segmental field portions into a further set of lightness values that represents substantially all locations of said image field.

6. The method of claim 5, the further improvement comprising the step of storing image field information responsive to each second resultant set of lightness values on a photographic medium for said formatting of second resultant sets of lightness values.

7. The method of claim 1, the further improvement comprising the steps of performing said storage of claim 1 C and E at least in part during the execution of said former computational operations.

8. Apparatus for processing a set of values representing an image field and wherein the processing includes plural computational operations with values representing spatially different locations of said field, the improvement comprising

A. a pictorial record of said image field, and

B. means for reading said pictorial record to produce said first set of lightness values and for reading said pictorial record to at least a second set of lightness values,

C. means including a read/write memory element for storing said first set of lightness values of said image field,

D. means for performing averaging on said first set of lightness values, to produce an intermediate set of lightness values relatively coarsely representing substantially all locations of said image field,

E. means for storing said second set of lightness values that represent of said same image field in locations of said memory element which at a different time stored values of said first set thereof,

F. means for performing plural further averaging operations on said second set of values, to produce plural second resultant sets of values, each of which relatively finely represents only a segmental portion of said image field and different ones of which represents different segmental portions of said image field, and

G. means for producing a final set of values representing substantially all locations of said image field, in response to said intermediate set of lightness values, which represents substantially all locations of said image field, and to plural second resultants sets of lightness values representing different segmental portions of said field.

9. An image processing apparatus according to claim 8, the further improvement comprising means for formatting different second resultant sets of lightness values representing different segmental field portions into a further set of lightness values that represents substantially all locations of said image field.

**Patentansprüche**

1. Verfahren zur Behandlung einer Gruppe von Werten, die ein Bildfeld repräsentieren, wobei die Bahandlung mehrere Rechenoperationen mit Werten umfaßt, die räumlich unterschiedliche Stellen des Feldes repräsentieren, umfassend die folgenden Schritte:

A. es wird eine bildhafte Aufzeichnung des Bildfeldes vorgesehen, und

B. es wird die bildhafte Aufzeichnung ein erstes Mal ausgelesen, um eine erste Gruppe von Helligkeitswerten zu erzeugen, und es wird die bildmäßige Aufzeichnung wenigstens ein zweites Mal ausgelesen, um wenigstens eine zweite Gruppe von Helligkeitswerten zu erzeugen,

C. es wird in einem Lese/Schreib-Speicherelement besagte erste Gruppe von Helligkeitswerten im wesentlichen sämtlicher Stellen des Bildfeldes gespeichert,

D. es wird besagte erste Gruppe von Helligkeitswerten gemittelt, um eine Zwischengruppe von Werten zu erzeugen, die relativ grob im wesentlichen alle Stellen des Bildfeldes repräsentieren,

E. es wird besagte zweite Gruppe von Helligkeitswerten des gleichen Bildfeldes an Stellen des Speicherelementes gespeichert, die zu einem anderen Zeitpunkt Werte besagter erster Gruppe gespeichert haben;

F. es werden mehrere weitere Durchschnittsbildungen besagter zweiter Gruppe von Werten durchgeführt, um mehrere zweite resultierende Gruppen von Werten zu erzeugen, von denen jede relativ fein nur einen Segmentausschnitt des Bildfeldes repräsentiert und verschiedene hiervon andere Segmentabschnitte des Bildfeldes repräsentieren, und

G. es wird eine Endgruppe von Werten, die im wesentlichen alle Stellen des Bildfeldes repräsentieren, gemäß der Zwischengruppe von Helligkeitswerten, die im wesentlichen alle Stellen des Bildfeldes repräsentieren und gemäß mehreren zweiten resultierenden Gruppen von Helligkeitswerten, die unterschiedliche Segmentabschnitte des Feldes repräsentieren, erzeugt.

2. Verfahren nach Anspruch 1, bei dem die weitere Verbesserung den Schritt umfaßt, jede weitere Rechenoperation sowohl bei einer zweiten Gruppe von Helligkeitswerten, die nur einen Teil besagten Bildfeldes repräsentieren als auch bei einer weiteren Gruppe von Helligkeitswerten durchzuführen, die von der Zwischengruppe von Helligkeitswerten erzeugt werden.

3. Verfahren nach Anspruch 1 bei dem die weitere Verbesserung den Schritt umfaßt, von jeder zweiten resultierenden Gruppe von Helligkeitswerten jene Werte auszuscheiden, die von Rechenoperationen mit Helligkeitswerten einer zweiten Gruppe herrühren und Stellen besagten Feldes außerhalb jenes Segmentabschnitts repräsentieren, für den jene zweite Gruppe von Helligkeitswerten repräsentativ ist.

4. Verfahren nach Anspruch 3 bei dem die weitere Verbesserung den weiteren Schritt umfaßt, unterschiedliche zweite resultierende Gruppen von Helligkeitswerten, die selektiv überlappende unterschiedliche Segmentfeldabschnitte repräsentieren, in eine weitere Gruppe von Helligkeitswerten zu formatieren, die im wesentlichen alle Stellen des Bildfeldes repräsentieren.

5. Verfahren nach Anspruch 1 bei der die weitere Verbesserung den Schritt umfaßt, unterschiedliche zweite resultierende Gruppen von Helligkeitswerten, die unterschiedliche Segmentfeldabschnitte repräsentieren, in eine weitere Gruppe von Helligkeitswerten zu formatieren, die im wesentlichen alle Stellen des Bildfeldes repräsentieren.

6. Verfahren nach Anspruch 5 bei der die weitere Verbesserung den Schritt umfaßt, die Bildfeldinformationen, die gemäß jeder zweiten resultierenden Gruppe von Helligkeitswerten auf einem photographischen Medium zu speichern, um die zweite resultierende Gruppe von Helligkeitswerten zu formatieren.

7. Verfahren nach Anspruch 1 bei der die weitere Verbesserung den Schritt umfaßt, die Speicherung gemäß Anspruch 1 C und E wenigstens teilweise während der Durchführung der vorhergehenden Rechenoperationen durchzuführen.

8. Vorrichtung zur Verarbeitung einer Gruppe von Werten, die ein Bildfeld repräsentieren, wobei die Verarbeitung mehrere Rechenoperationen mit Werten umfaßt, die räumlich unterschiedliche Stellen des Feldes repräsentieren und wobei die Verbesserung folgende Merkmale umfaßt:

A. eine bildhafte Aufzeichnung des Bildfeldes, und

B. Mittel zum Auslesen der bildhaften Aufzeichnung, um besagte erste Gruppe von Helligkeitswerten zu erzeugen und zum bildhaften Auslesen um wenigstens eine zweite Gruppe von Helligkeitswerten zu erzeugen,

C. Mittel einschließlich eines Lese/Schreib-Speicherelementes zum Speichern der ersten Gruppe von Helligkeitswerten des Bildfeldes,

D. Mittel zur Durchführung einer Durchschnittsbildung der besagten ersten Gruppe von Helligkeitswerten, um eine Zwischengruppe von Helligkeitswerten zu erzeugen, die relativ grob und die im wesentlichen alle Stellen des Bildfeldes repräsentieren,

E. Mittel zur Speicherung der besagten zweiten Gruppe von Helligkeitswerten des gleichen Bildfeldes an Stellen des Speicherelementes, die zu einem anderen Zeitpunkt Werte der ersten Gruppe gespeichert haben,

F. Mittel zur Durchführung mehrerer weiterer Durchschnittsbildungen bei der zweiten Gruppe von Werten, um mehrere zweite resultierende Gruppen von Werten zu erzeugen, von denen jede nur einen Segmentabschnitt des Bildfeldes relativ fein aufgelöst repräsentieren, und von denen einige verschiedene Segmentabschnitte des Bildfeldes repräsentieren, und

G. Mittel zur Erzeugung einer endgültigen Gruppe von Werten, die im wesentlichen alle Stellen des Bildfeldes repräsentieren, und zwar gemäß der Zwischengruppe von Helligkeitswerten, die im wesentlichen alle Stellen des Bildfeldes repräsentieren, und gemäß der Mehrzahl der zweiten resultierenden Gruppen von Helligkeitswerten, die unterschiedliche Segmentabschnitte des Feldes repräsentieren.

9. Bildverarbeitungsvorrichtung nach Anspruch 8 bei dem die weitere Verbesserung Mittel umfaßt, um verschiedene zweite resultierende Gruppen von Helligkeitswerten, die unterschiedliche Segmentabschnitte repräsentieren, in eine weitere Gruppe von Helligkeitswerten zu formattieren, die im wesentlichen alle Stellen des Bildfeldes repräsentieren.

**Revendications**

1. Procédé pour traiter un ensemble de valeurs représentant une trame d'image, dans lequel le traitement comprend plusieurs opérations de calcul avec des valeurs représentant des emplacements de ladite trame disposés différemment dans l'espace, comprenant les étapes suivantes :

A - réalisation d'un enregistrement sous forme d'image de ladite trame d'image, et

B - lecture dudit enregistrement se présentant sous forme d'image une première fois pour produire un premier ensemble de valeurs de luminance et lecture dudit enregistrement se présentant sous forme d'image au moins une seconde fois pour produire au moins un second ensemble de valeurs de luminance,

C - stockage dans un élément de mémoire vive dudit premier ensemble de valeurs de luminance de sensiblement tous les emplacements de ladite trame d'image,

D - calcul de la moyenne dudit premier ensemble de valeurs de luminance pour produire un ensemble intermédiaire de valeurs représentant de façon relativement grossière sensiblement tous les emplacements de ladite trame d'image,

E - stockage dudit ensemble de valeurs de luminance de ladite même trame d'image dans des emplacements dudit élément de mémoire qui, à des moments différents, ont stocké des valeurs du premier ensemble de ces dernières,

F - exécution de plusieurs autres opérations de calcul de moyenne sur ledit second ensemble de valeurs pour produire plusieurs seconds ensembles résultants de valeurs qui représentent chacun de façon relativement fine uniquement une partie segmentaire de la trame d'image et parmi lesquels des ensembles différents représentent des parties segmentaires différentes de la trame d'image, et

G - production d'un ensemble final de valeurs, représentant sensiblement tous les emplacements de ladite trame d'image, en réponse audit ensemble intermédiaire de valeurs de luminance qui représente sensiblement tous les emplacements de ladite trame d'image, et à plusieurs seconds ensembles résultants de valeurs de luminance représentant des parties segmentaires différentes de ladite trame.

2. Procédé selon la revendication 1, le perfectionnement supplémentaire comprenant l'étape consistant à exécuter chaque autre opération de calcul, à la fois sur un second ensemble de valeurs de luminance représentant uniquement une partie de ladite trame d'image et sur un autre ensemble de valeurs de luminance produit à partir dudit ensemble intermédiaire de valeurs de luminance.

3. Procédé selon la revendication 1, le perfectionnement supplémentaire comprenant l'étape consistant à éliminer de chaque second ensemble résultant de valeurs de luminance celles des valeurs qui proviennent des opérations de calcul avec les valeurs de luminance d'un second ensemble et représentant les emplacements de ladite trame à l'extérieur de la partie segmentaire, que ce second ensemble de valeurs de luminance représente.

4. Procédé selon la revendication 3, le perfectionnement supplémentaire comprenant l'étape consistant à formater, sous la forme d'un autre ensemble de valeurs de luminance qui représente sensiblement tous les emplacements de ladite trame d'image, des seconds ensembles résultants de valeurs de luminance différents représentant des parties de trame segmentaires différentes qui se recouvrent sélectivement.

5. Procédé selon la revendication 1, le perfectionnement supplémentaire comprenant l'étape consistant à formater, sous forme d'un autre ensemble de valeurs de luminance qui représente sensiblement tous les emplacements de ladite trame d'image, des seconds ensembles résultants de valeurs de luminance différents représentant des parties segmentaires de trame différentes.

6. Procédé selon la revendication 5, le perfectionnement supplémentaire comprenant l'étape consistant à stocker, en réponse à chaque second ensemble résultant de valeurs de luminance, des informations de trame d'image sur un support photographique pour ledit formatage des seconds ensembles résultants de valeurs de luminance.

7. Procédé selon la revendication 1, le perfectionnement supplémentaire comprenant les étapes consistant à exécuter ledit stockage de la revendication 1, paragraphes C et E, au moins en partie pendant l'exécution desdites premières opérations de calcul.

8. Appareil pour traiter un ensemble de valeurs représentant une trame d'image et dans lequel le traitement comprend plusieurs opérations de calcul avec des valeurs représentant des emplacements différents de ladite trame dans l'espace, le perfectionnement comprenant :

   (A) un enregistrement sous forme d'image de ladite trame d'image, et

   (B) un moyen pour lire ledit enregistrement sous forme d'image afin de produire le premier ensemble de valeurs de luminance et pour lire ledit enregistrement se présentant sous forme d'image afin de produire au moins un second ensemble de valeurs de luminance,

   (C) un moyen comprenant un élément de mémoire vive pour stocker ledit premier ensemble de valeurs de luminance de la trame d'image,

   (D) un moyen pour exécuter un calcul de moyenne sur ledit premier ensemble de valeurs de luminance afin de produire un ensemble intermédiaire de valeurs de luminance représentant, de façon relativement grossière, sensiblement tous les emplacements de ladite trame d'image,

(E) un moyen pour stocker ledit second ensemble de valeurs de luminance qui représente la même trame d'image à des emplacements de l'élément de mémoire qui a stocké à différents moments les valeurs dudit premier ensemble de ces dernières,

(F) un moyen pour exécuter plusieurs autres opérations de calcul de moyenne sur ledit second ensemble de valeurs afin de produire plusieurs seconds ensembles résultants de valeurs qui représentent chacun de façon relativement fine uniquement une partie segmentaire de ladite trame d'image et parmi lesquels des ensembles différents représentent des parties segmentaires différentes de ladite trame d'image, et

(G) un moyen pour produire un ensemble final de valeurs représentant sensiblement tous les emplacements de ladite trame d'image, en réponse à l'ensemble intermédiaire de valeurs de luminance, qui représente sensiblement tous les emplacements de ladite trame d'image, et à plusieurs seconds ensembles résultants de valeurs de luminance représentant différentes parties segmentaires de ladite trame.

9. Appareil de traitement d'image selon la revendication 8, le perfectionnement supplémentaire comprenant un moyen pour formater, sous forme d'un autre ensemble de valeurs de luminance qui représente sensiblement tous les emplacements de ladite trame d'image, des seconds ensembles résultants de valeurs de luminance différents représentant des parties de trame segmentaires différentes.

FIG. 1

| | | |
|---|---|---|
| 1 | 256 | 2x2 |
| 2 | 128 | 4x4 |
| 3 | 64 | 8x8 |
| 4 | 32 | 16x16 |
| 5 | 16 | 32x32 |
| 6 | 8 | 64x64 |
| 7 | 4 | 128x128 |
| 8 | 2 | 256xn |
| 9 | 1 | 512xm |

60
62
64
66 16x16
68 32x32
70 64x64
72 128x128

74a  76a  78a
74b 256x256  76b  78b 256x256
74c 512x512  76c  78c 512x512
74d  76d  78d
54  54  54

FIG. 2

16

FIG. 3

FIG. 4

EP 0 132 795 B1

FIG. 5

**128**

1-4
5-8
9-12
13-16
17-20
21-24
25-28
29-32

505-508
509-512

72

74"

**256**

1-2
3-4
5-6
7-8
9-10
11-12
13-14
15-16

74"

86

**256**

1-2
3-4
5-6
7-8
9-10
11-12
13-14
15-16

80"

**512**

1
2
3
4
5
6
7
8
9
10
11
12
13
14
15
16

80'

88

**256**

1-2
3-4
5-6
7-8
9-10
11-12
13-14 X
15-16 X

82'

**512**

1
2
3
4
5
6
7
8
9
10
11
12

82"

**512**

1
2
3
4
5
6
7
8
9
10
11 X
12 X

84'

FIG. 6

EP 0 132 795 B1

FIG. 7

EP 0 132 795 B1

| | | | |
|---|---|---|---|
| 1 | 64 × 64 | 32 | 256 |
| 2 | 64 × 64 | 16 | 128 |
| 3 | 64 × 64 | 8 | 64 |
| 4 | 64 × 64 | 4 | 32 |
| 5 | 64 × 64 | 2 | 16 |
| 6 | 64 × 64 | 1 | 8 |
| 7 | 512 × 8 | – | 4 |
| 8 | 512 × 8 | – | 2 |
| 9 | 512 × 8 | – | 1 |

FIG. 8

FIG. 9